# EUROPEAN PATENT SPECIFICATION

(11) **EP 3 726 045 B1**
(45) Date of publication and mention of the grant of the patent: **29.03.2023**
(21) Application number: 20169951.9
(22) Date of filing: 16.04.2020
(51) Int. Cl.: F02M 35/02, F02M 35/024, B01D 46/00, F02M 35/04, F02M 35/12, B01D 46/12, F02M 35/10, B01D 46/24, B01D 46/42, B01D 46/58

(54) **FILTERING DEVICE FOR THE AIR TAKEN IN BY THE ENGINE OF A CAR AND CAR PROVIDED WITH THE FILTERING DEVICE**
FILTERVORRICHTUNG FÜR DIE VOM MOTOR EINES KRAFTFAHRZEUGES ANGESAUGTE LUFT UND MIT DER FILTERVORRICHTUNG AUSGERÜSTETES KRAFTFAHRZEUG
DISPOSITIF DE FILTRATION POUR L'AIR ASPIRÉ PAR LE MOTEUR D'UNE VOITURE ET VOITURE MUNIE DU DISPOSITIF DE FILTRAGE

(30) Priority: 16.04.2019 IT 201900005872
(43) Date of publication of application: 21.10.2020
(73) Proprietor: BMC S.R.L., 40059 Medicina (IT)
(72) Inventor: BERGAMI, Gaetano, 40059 MEDICINA (BO) (IT)
(74) Representative: Maccagnan, Matteo

(56) References cited:
- DE-A1-102004 015 331
- DE-U1-202007 003 941
- US-A- 4 897 097
- US-A1- 2003 116 021
- US-A1- 2017 361 256
- US-A1- 2018 099 243
- US-B2- 6 726 737

## Description

### TECHNICAL FIELD

The present invention relates to a filtering device for the air taken in by an engine of a car and to a car provided with the filtering device.

### PRIOR ART

In cars currently on the market, the filtering device for the air taken in by the internal combustion heat engine comprises a typically parallelepiped-shaped air-box which houses, within itself, a filtering element; the filtering element divides the air box into an inlet chamber, which is arranged upstream of the filtering element and communicates with the outside through an inlet opening, and an outlet chamber, which is arranged downstream of the filtering element and communicates with the intake system of the internal combustion heat engine through an outlet opening. The filtering element must have a free passage area that is large enough for having a sufficiently limited pressure drop (i.e. a difference in pressure between the air upstream and downstream of the filtering device) since the greater the pressure drop caused by the filtering device, the greater the reduction in the maximum power that can be generated by the internal combustion heat engine. Moreover, also the outlet chamber must have a volume that is large enough to perform correctly its function of lung of the intake system, i.e. for storing a quantity of air that is large enough to absorb the fluctuations in the quantity of air taken in by the intake system.

In accordance with the above, it becomes obvious that, in order to avoid inhibiting the performance of the internal combustion heat engine, the size of the air-box must be relatively large; however, in the cars currently on the market, the space available in the engine compartment for housing the filter-box is increasingly reduced. As a result, it is becoming increasingly difficult in more recent cars to arrange in the engine compartment an air-box that is large enough to avoid inhibiting the performance of the internal combustion heat engine.

Moreover, it is also necessary to limit the noise of air intake coming from the air-box, in particular in cars with an engine arranged in a central position wherein the engine (thus the air-box) is arranged close to the cabin (sometimes with a minimal separation or even in fact no separation from the cabin). In other words, if the air-box is not adequately soundproofed in order to reduce the noise emitted by the air-box, it is not possible to install the air-box in a car with an engine arranged in a central position since the regulations impose relatively reduced maximum limits to the noise in the cabin.

The patents US6726737 B2 and US4897097A1 describe a filtering device for the air taken in by an internal combustion heat engine of a car; the filtering device comprising: an air-box which comprises, on the inside, a single cavity having two inlet openings towards the outside and a single outlet opening towards the internal combustion heat engine; and two plane (flat) filters which are arranged inside the cavity and divide the cavity into one single outlet chamber, which is arranged downstream of the filters and communicates with the internal combustion heat engine through the outlet opening, and into two inlet chambers which are arranged upstream of the respective filters, and communicate with the outside through the respective inlet openings.

### DESCRIPTION OF THE INVENTION

The object of the present invention is to provide a filtering device for the air taken in by an engine of a car, the filtering device thereof being devoid of the drawbacks described above (in particular enabling a limitation of the noise of air intake coming from the air-box) and, at the same time, being easy and economical to produce.

In accordance with the present invention, a filtering device for the air taken in by an engine of a car and a car provided with the filtering device are provided in accordance with the appended claims.

The claims describe preferred embodiments of the present invention and constitute an integral part of the present description.

### BRIEF DESCRIPTION OF THE DRAWINGS

The present invention will now be described with reference to the attached figures, which illustrate a nonlimiting embodiment, wherein:
- Figure 1 is a schematic and diagrammatic view of a car provided with a filtering device realized in accordance with the present invention;
- Figure 2 is a schematic side view of the car in Figure 1;
- Figure 3 is a perspective view of a filtering device of the car of Figure 1;
- Figure 4 is a perspective view of the filtering device of Figure 3 with a removed lid;
- Figure 5 is a perspective view of the filtering device of Figure 3 with the lid and a pair of filters removed;
- Figure 6 is a top view of the filtering device of Figure 3 with the lid removed;
- Figure 7 is a top view of the filtering device of Figure 3 with the lid and the pair of filters removed; and

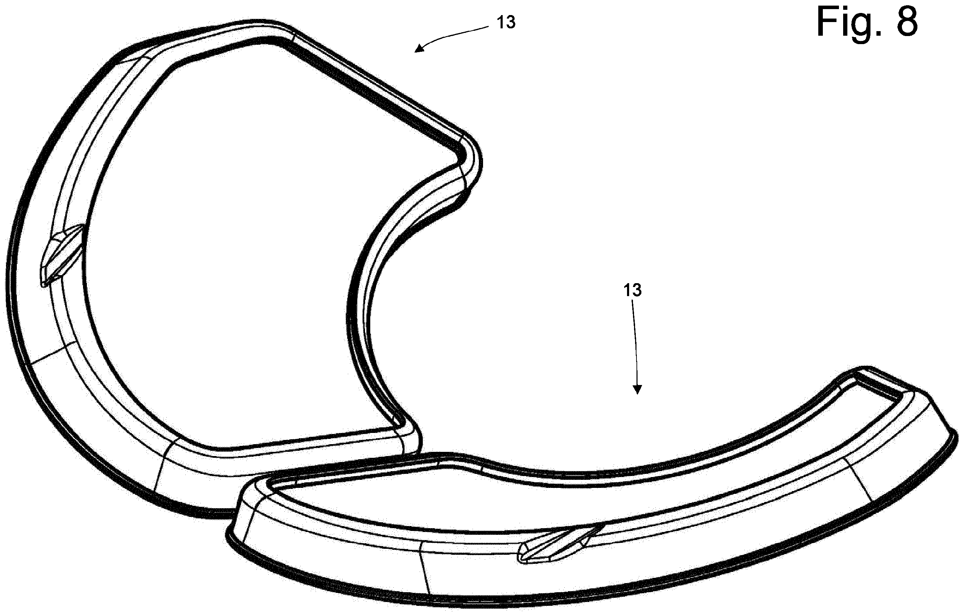

- Figure 8 is a perspective view of the pair of filters of the filtering device of Figure 3.

### PREFERRED EMBODIMENTS OF THE INVENTION

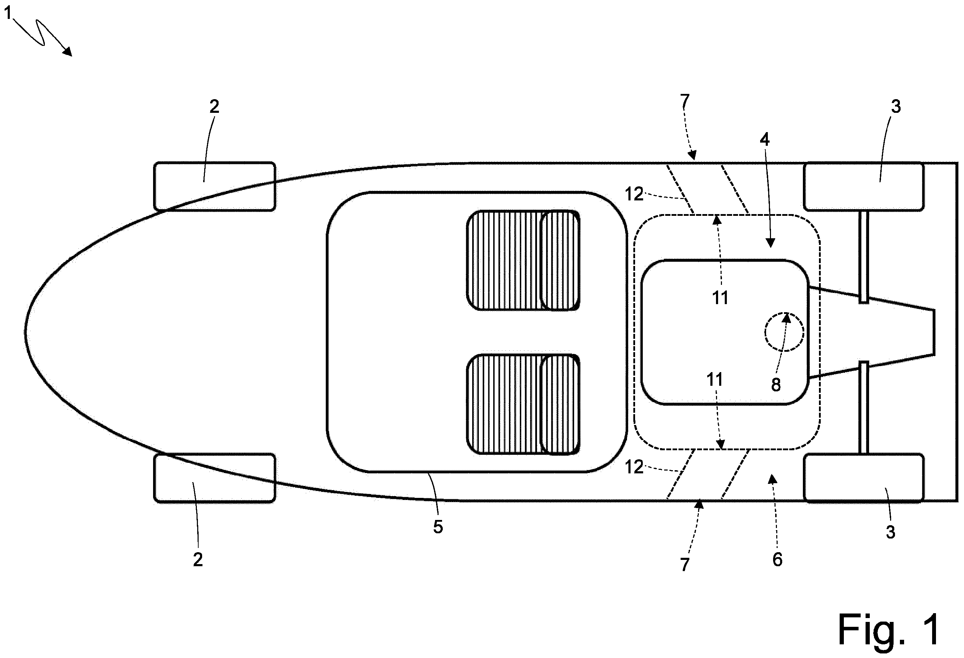

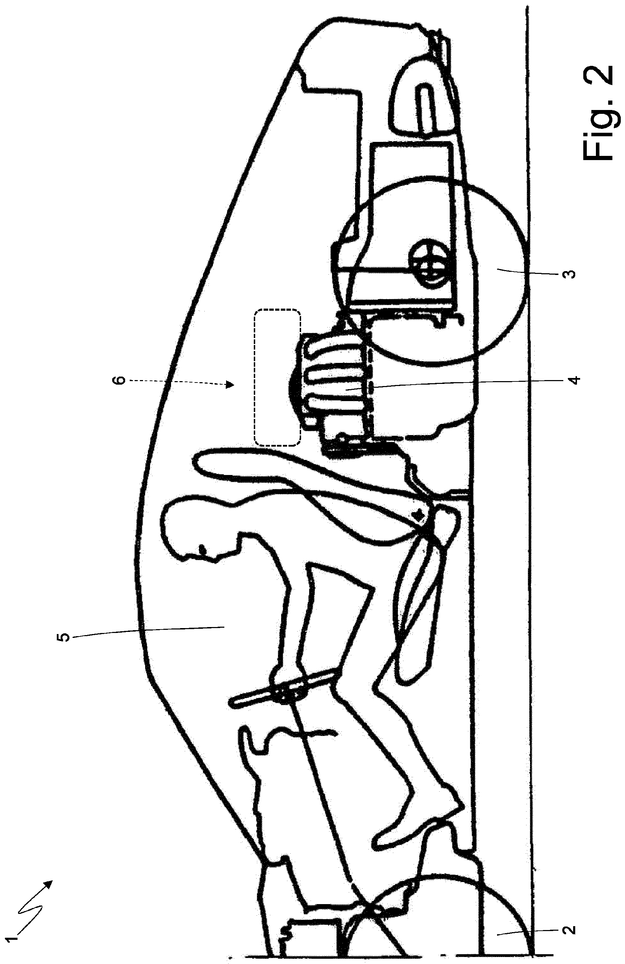

In Figures 1 and 2, number 1 indicates a car as a whole comprising two steered front wheels 2 and two driven rear wheels 3. The car 1 comprises an internal combustion heat engine 4 in a central position which transmits motion to the rear driven wheels 3. Moreover, the car 1 comprises a cabin 5 which is arranged in front of the internal combustion heat engine 4 (and close to the internal combustion heat engine 4) and accommodates a pair of seats for the driver and for a passenger.

The internal combustion heat engine 4 is provided with a filtering device 6 for the supply of fresh air, which receives the air from the outside through two (dynamic) air intakes 7 formed on the two opposite sides of the car 1 and feeds the filtered air toward the cylinders of the internal combustion heat engine 4 through a single outlet opening 8 arranged in a central position. In particular and as illustrated in Figure 2, the filtering device 6 is arranged on top of the internal combustion heat engine 4 and the outlet opening 8 thus opens downwards.

The internal combustion heat engine 4 comprises an intake system which is provided on the inlet side with (at least) one butterfly valve which regulates the inlet of fresh air to the interior of a corresponding intake manifold which communicates with the cylinders by means of respective intake channels. If the cylinders of the internal combustion heat engine 4 are arranged on two distinct banks forming a "V", two intake manifolds, each potentially equipped with a corresponding butterfly valve, could be provided.

According to a possible embodiment, there is no clear separation between the cabin 5 and the engine compartment (i.e. the volume in which the internal combustion heat engine 4 is housed) i.e. there is no interruption between the cabin 5 and the engine compartment; thus, from a certain perspective, the engine compartment is obtained inside the cabin 5 or, from another perspective, the cabin 5 is obtained inside the engine compartment. Consequently, it is necessary to limit to a minimum the noise of the air intake coming from the filtering device 6 inasmuch as all the noise of the air intake coming from the filtering device 6 reaches the occupants of the cabin 5 directly without any barriers; it is also necessary to prevent any loss of air by the filtering device 6 in order to avoid that air coming from the filtering device 6 can reach the occupants of the cabin 5 directly.

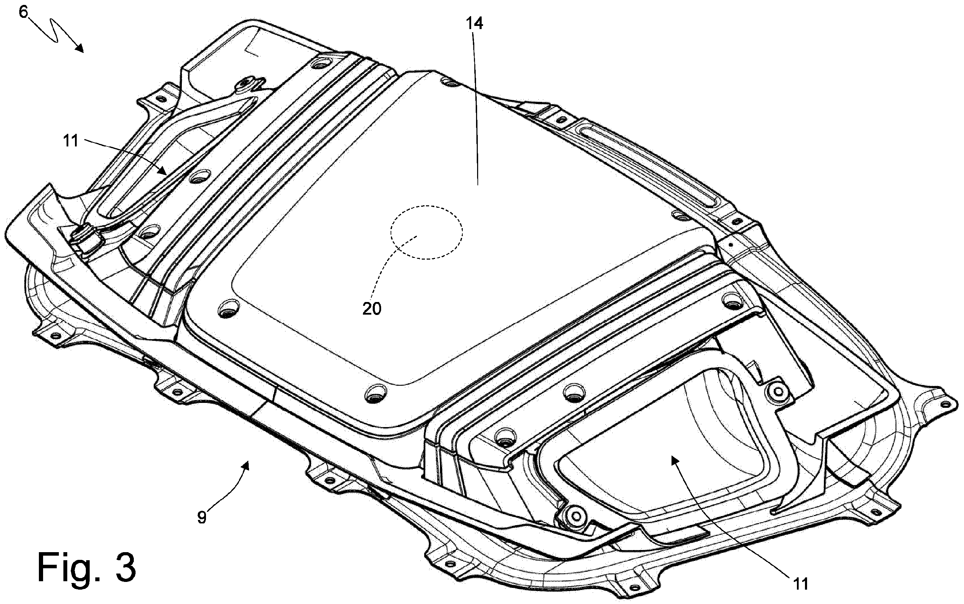

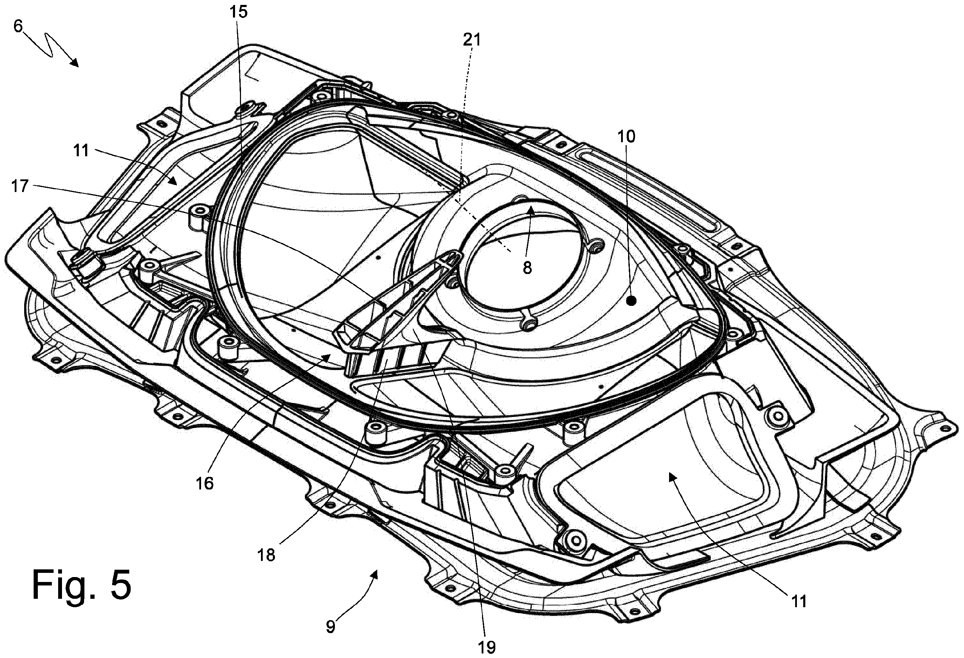

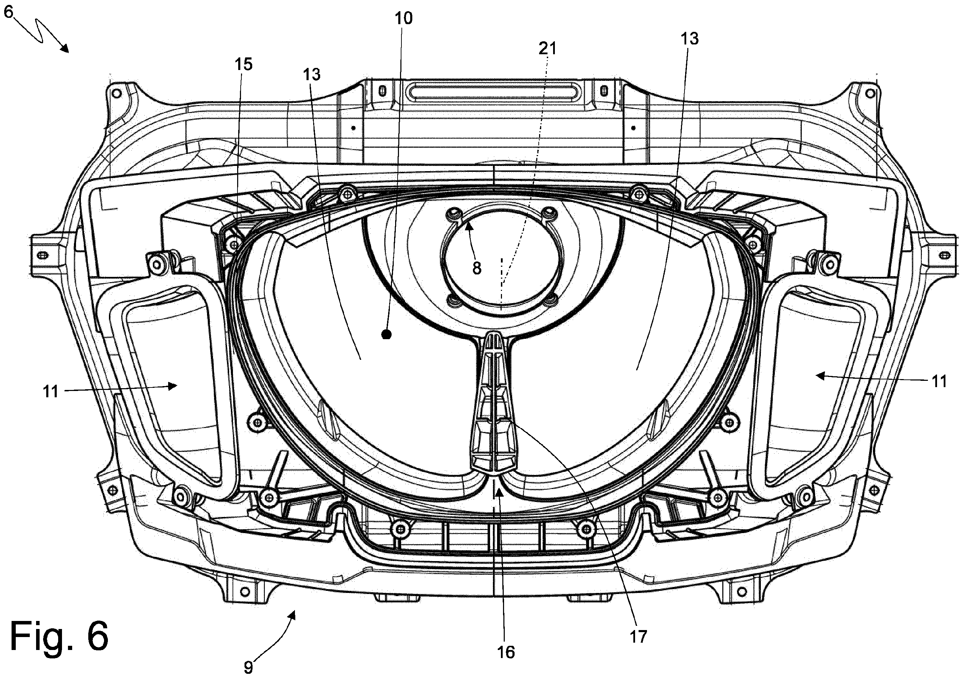

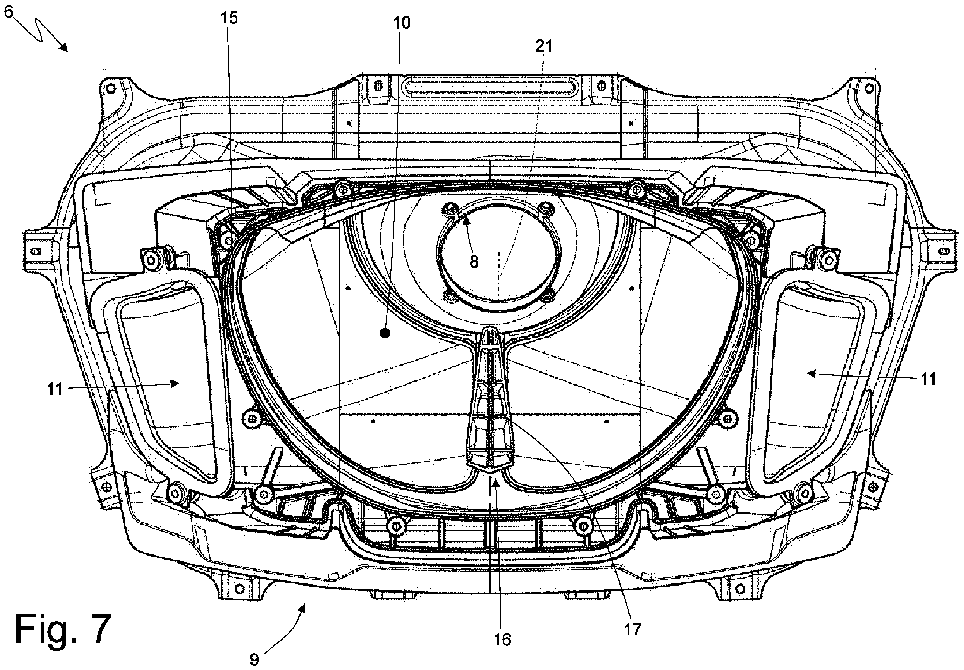

In accordance with the illustrations shown in Figures 3-7, the filtering device 6 comprises an air-box 9 which has, on the inside, a cavity 10 having two inlet openings 11 towards the outside and one single outlet opening 8 towards the intake system of the internal combustion heat engine 4; each inlet opening 11 is in communication with a corresponding air intake 7 by means of a tubular intake channel 12 (illustrated schematically in Figure 1); it is important to emphasize that each inlet opening 11 is very close to the corresponding air intake 7 and thus the intake channel 12 is very short and thus with pressure drops very low. This way, when the vehicle 1 is in motion, the air pressure against the sides of the vehicle 1 allows generating a positive pressure inside the cavity 10 which increases with the speed of the vehicle 1; this positive pressure inside the cavity 10 allows augmenting the filling of the cylinders of the internal combustion heat engine 4 and thus increasing the power generated by the internal combustion heat engine 4.

Moreover, the filtering device 6 comprises two filters 13, each of which is housed inside the air-box 9 and arranged between a corresponding inlet opening 11 and the outlet opening 8; in particular, the cavity 10 comprises two seats which reproduce, in negative, a part of the shape of the two filters 13 and are designed to house the two filters 13. The two filters 13 divide the cavity 10 into a pair of inlet chambers, each of which is arranged upstream of a corresponding filter 13 and communicates with the outside through a corresponding inlet opening 11, and one single outlet chamber, which is arranged downstream of the filters 13 and communicates with the intake system of the internal combustion heat engine 4 through the outlet opening 8. In other words, a tubular-shaped inlet chamber is defined between an inlet opening 11 and the corresponding filter 13 while the outlet chamber is defined between the two filters 13 and the single outlet opening 8.

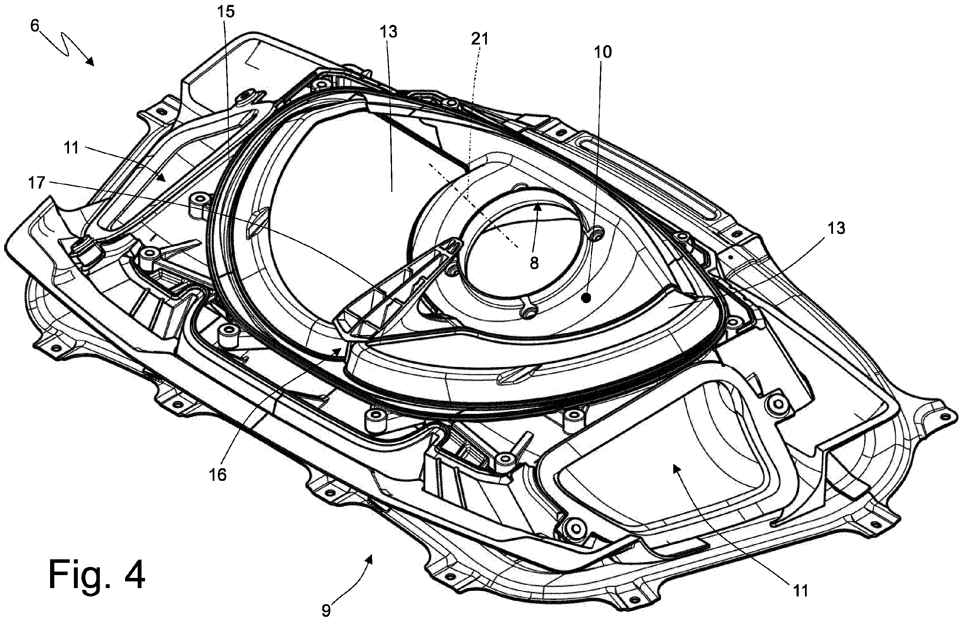

The single outlet chamber has the shape of a "Greek theatre", wherein the outlet opening 8 is formed in the area of the "stage", which is arranged at the centre and which has a roughly semi-circular or semi-elliptical shape, whereas the two filters 13 (which match and mirror each other) are arranged beside each other in the area of the "stands". Moreover, the single outlet chamber is delimited at the top by a removable lid 14 which can be coupled (as illustrated in Figure 3) or uncoupled (as illustrated in Figures 4-7) to/from the air-box 9; for instance, the lid 14 could be screwed to the air-box 9. Preferably, between the lid 14 and the air-box 9, an annular elastic gasket 15 is inserted which ensures both a pneumatic insulation (in order to avoid the leaking of air from the outlet chamber of the air-box 9) and an acoustic insulation (in order to reduce the noise towards the outside of the air-box 9) . On the other hand, each inlet chamber has a tubular shape and extends towards the respective inlet opening 11; consequently, the two inlet chambers opposite each other extend laterally from the outlet chamber and starting from opposite ends of said outlet chamber.

A locking body 16 is provided, which is interposed between the two filters 13 and fulfils the function of pressing the two filters 13 in order to keep them in the correct position preventing any kind of displacement of the two filters 13 (and thus preventing the two filters 13 from vibrating). The locking body 16 has an upper wall 17 which rests against the inner surface of the lid 14 so that the lid 14, when mounted, presses the locking body 16 downward (i.e. forces the locking body 16 against the lower surface of the cavity 10); in other words, the lid presses the upper wall 17 of the locking body 16 in order to force the locking body 16 against a lower wall of the air-box 9 (or against the bottom of the cavity 10). Moreover, the locking body 16 has a wedge-shaped lower portion 18 (or has the shape of a truncated cone) which is placed between the two filters 13 and, as the result of its wedge shape, pushes the two filters 13 gradually and laterally (transversally) while the lid 14 is screwed onto the air-box 9. Finally, the locking body 16 has an intermediate portion 19 that joins the upper wall 17 to the lower portion 18 and is shaped so as to guide the air flows coming from the filters 13 towards the outlet opening 8; in other words, the intermediate portion 19 of the locking body 16 performs the function of deflecting the air flows coming from the filters 13.

When having to replace or clean the filters 13, it is necessary to detach the lid 14 beforehand; when the lid 14 is removed, the locking body 16 is no longer pressed downward by the lid 14 and thus with its upward motion gives play to the filters 13 (no longer transversely compressed by the wedge-shaped lower portion 18 of the locking body 16). As a result, it becomes quick and easy to remove the locking body 16 and thus the two filters 13. In order to mount the two filters 13, the operations described above are carried out in the opposite order.

As mentioned above, the air-box 9 is designed to be arranged on top of the internal combustion heat engine 4 so as to constitute an upper cover of the internal combustion heat engine 4; as a result, the air-box 9 has a vertical thickness that is much smaller than a horizontal extension; for instance, the maximum vertical thickness of the air-box 9 is generally in the range 25-35 cm, the transversal width of the air-box 9 is generally in the range 110-160 cm and the longitudinal length of the air-box 9 is generally in the range 60-120 cm.

The air-box 9 is obtained by joining a lower shell, where the outlet opening 8 is obtained, and an upper shell, where the two inlet openings 11 and an upper opening (facing and opposite the outlet opening 8) closed by the lid 14 are obtained.

According to a preferred embodiment, a pair of annular elastic gaskets are also provided, each of which is inserted between an inlet opening 11 and a corresponding intake channel 12 in order to ensure both a pneumatic insulation and an acoustic insulation.

According to a possible embodiment, the lid 14 can be coated on the inside (generally with the exception of the area that presses against the upper wall 17 of the locking body 16) with a sound-absorbing material in order to reduce the acoustic emissions emanating from the air-box 9. Also other parts of the air-box 9 other than the lid 14 can be coated on the inside with a sound-absorbing material in order to reduce the acoustic emissions emanating from the air-box 9.

According to a possible embodiment, at least one replaceable absorbing element 20 is arranged inside the cavity 10 (illustrated schematically in Figure 3) designed to hold back polluting elements (in particular HC groups) which could get into the cavity 10 from the internal combustion heat engine 4 through the outlet opening 8 (in particular when the internal combustion heat engine 4 has an EGR system which re-emits a part of the exhaust gas into the intake). Preferably, but not compulsorily, the absorbing element 20 is mounted on the lid 14 in such a manner as to be easily viewable and replaceable when the lid 14 is detached.

The filtering device 6 comprises at least one channel for discharging water that originates from a lower wall of the air-box 9 (i.e. from the bottom of the cavity 10) and ends towards the street in order to drain any water entering through the air intakes 7 and accumulating on the bottom of the cavity 10. The channel for discharging water is provided with a discharge valve that is normally closed and opens only occasionally (when necessary) in order to allow the discharge of the water; this way, the cavity 10 remains (almost) always insulated from the outside (since the discharge valve is normally closed) and thus the acoustic emissions are reduced to a minimum also through the discharge channel.

Each filter 13 has a curved profile having a concavity oriented towards the outlet opening 8; in other words, each filter 13 is not plane (flat), but curved (i.e. cup-shaped) and thus has a concavity oriented towards the outlet opening 8. Each filter 13 has a curved and open profile, i.e. the filter 13 does not have a closed geometric shape without a beginning or an end (like, for instance, a cylinder or a cone section) but has an open geometric shape that has a beginning and an end.

In particular, each filter 13 has a curved progression configured so that an average of an inner surface of the filter 13 oriented towards the outlet opening 8 has the points that lie on a line parallel to a longitudinal axis 21 of the outlet opening 8 projected onto the inner surface and are equidistant from the longitudinal axis 21. According to a possible embodiment, each filter 13 has a curved progression configured in such a manner that each point of the inner surface of the filter 13 oriented towards the outlet opening 8 is equidistant from the longitudinal axis 21 of the outlet opening 8; in other words, all the points of the inner surface of the filter 13 oriented towards the outlet opening 8 are located at the same distance from the longitudinal axis 21 of the outlet opening 8. Preferably, each filter 13 has a curved progression on a cylindrical generatrix centred on the longitudinal axis 21 of the outlet opening 8; i.e. each filter 13 lies on a section of a cylindrical surface centred on the longitudinal axis 21 of the outlet opening 8. The cylindrical generatrix of the plane progression of each filter can have a constant radius (thus all points of the inner surface of the filter 13 are at the same distance from the longitudinal axis 21 of the outlet opening 8) or can have a variable radius (thus the points of the inner surface of the filter 13 are at a variable distance from the longitudinal axis 21 of the outlet opening 8).

The filtering device 6 described above has numerous advantages.

First of all, the filtering device 6 described above allows reducing the emission of noise by the filtering device 6 to very low levels and thus allows using said filtering device 6 also in a car 1 (in particular with a central engine) in which there is no effective separation between the cabin 5 and the engine compartment (i.e. the volume in which the internal combustion heat engine 4 is housed and thus also the filtering device 6).

Moreover, the filtering device 6 described above has a relatively reduced bulk (if compared to the overall volume of the cavity 10 and to the extension of the filters 13) and, above all, can be installed easily on top of the internal combustion heat engine 4 (i.e. in an area which is always sufficiently free even in sports cars 1 with a central engine).

Finally, the filtering device 6 described above allows achieving very high performances, i.e. allows taking in a large air load with modest pressure losses, as a result of the large free passage area of the two filters 13 and as a result of the configuration of the cavity 10 which optimizes the air-flow paths.

In particular, the curved configuration of the filters 13 allows creating a filtering device 6 with an enhanced performance which improves the performance of the air-box in terms of its fluid dynamics and, at the same time, allows saving space by realizing a smaller filtering device 6 with reduced pressure losses.

### LIST OF REFERENCES OF THE FIGURES

- 1: car
- 2: front wheels
- 3: rear wheels
- 4: heat engine
- 5: cabin
- 6: filtering device
- 7: air intakes
- 8: outlet opening
- 9: air-box
- 10: cavity
- 11: inlet openings
- 12: intake channels
- 13: filters
- 14: lid
- 15: elastic gasket
- 16: locking body
- 17: upper wall
- 18: lower portion
- 19: intermediate portion
- 20: absorbing element
- 21: longitudinal axis

## Claims

1. A filtering device (6) for the air taken in by an internal combustion heat engine (4) of a car (1); the filtering device (6) comprises:
an air-box (9), which comprises, on the inside, one single cavity (10) having two opposite inlet openings (11) towards the outside and one single outlet opening (8) towards the internal combustion heat engine (4); and
two filters (13), which are arranged inside the cavity (10) between the inlet opening (11) and the outlet opening (8) and divide the cavity (10) into one single outlet chamber, which is arranged downstream of the filters (13) and communicates with the internal combustion heat engine (4) through the outlet opening (8), and into two inlet chambers, which face opposite sides of the outlet chamber, are arranged upstream of the respective filters (13) and communicate with the outside through the respective inlet openings (11);
the filtering device (6) is **characterized in that:**
each filter (13) has a curved and open profile having a concavity oriented toward the outlet opening (8); and
the single outlet chamber has the shape of a *"Greek theatre",* wherein in the area of the *"stage",* which is arranged at the centre, there is the outlet opening (8), whereas in the area of the *"stands"* there are the two filters (13) beside one another.

2. The filtering device (6) according to Claim 1, wherein each filter (13) has a curved progression configured so that, on average, an inner surface of the filter (13) oriented towards the outlet opening (8) has the points that lie on a line parallel to a longitudinal axis (21) of the outlet opening (8) projected onto the inner surface and are equidistant from the longitudinal axis (21).

3. The filtering device (6) according to Claim 1 or 2, wherein each filter (13) has a curved progression on a cylindrical generatrix centred on a longitudinal axis (21) of the outlet opening (8).

4. The filtering device (6) according to Claim 1, 2 or 3 and comprising a locking body (16), which is interposed between the two filters (13) and fulfils the function of laterally pressing the two filters (13).

5. The filtering device (6) according to one of the Claims from 1 to 4, wherein the single outlet chamber is delimited, at the top, by a removable lid (14).

6. The filtering device (6) according to Claim 5, wherein:
a locking body (16) is provided, which is interposed between the two filters (13) and fulfils the function of laterally pressing the two filters (13);
the locking body (16) has an upper wall (17), which rests against an inner surface of the lid (14) so that the lid (14) presses the locking body (16) towards a bottom of the cavity (10); and
the locking body (16) has a lower portion (18), which is wedge-shaped and is arranged between the two filters (13) .

7. The filtering device (6) according to Claim 6, wherein the locking body (16) has an intermediate portion (19), which joins the upper wall (17) to the lower portion (18) and is shaped so as to guide the air flows coming from the filters (13) towards the outlet opening (8).

8. The filtering device (6) according to Claim 5, 6 or 7, wherein the air-box (9) is obtained by joining a lower shell, where the outlet opening (8) is obtained, and an upper shell, where the two inlet openings (11) are obtained as well as an upper opening, which faces and is opposite the outlet opening (8) and is closed by the lid (14).

9. The filtering device (6) according to one of the Claims from 5 to 8, wherein the lid (14) is coated, on the inside, with a sound-absorbing material.

10. The filtering device (6) according to one of the Claims from 1 to 9, wherein:
each inlet chamber has a tubular shape and extends towards the corresponding inlet opening (11); and
the two inlet chambers laterally extend from the outlet chamber and starting from opposite ends of the outlet chamber.

11. The filtering device (6) according to one of the Claims from 1 to 10, wherein the cavity (10) comprises two seats, which reproduce, in negative, the shape of the two filters (13) and are designed to house the two filters (13).

12. The filtering device (6) according to one of the Claims from 1 to 11 and comprising an absorbing element (20), which is arranged inside the cavity (10) and is designed to hold back polluting elements.

13. A car (1) comprising:
a pair of front wheels (2);
a pair of rear wheels (3);
an internal combustion heat engine (4) arranged in a central position;
two air intakes (7) obtained on two opposite body sides;
a filtering device (6) realized in accordance with one of the Claims from 1 to 12; and
two intake channels (12), each of which connects an air intake (7) to a corresponding inlet opening (11) of the air-box (9).

## Patentansprüche

1. Filtervorrichtung (6) für Luft, die von einem Verbrennungsmotor bzw. einer Verbrennungswärmekraftmaschine (4) eines Autos (1) angesaugt wird, wobei die Filtervorrichtung (6) umfasst:
eine Airbox bzw. einen Luftkasten (9), der innen einen einzelnen Hohlraum (10) mit zwei gegenüberliegenden bzw. entgegengesetzten Einlassöffnungen (11) nach außen hin und einer einzelnen Auslassöffnung (8) zu der Verbrennungswärmekraftmaschine (4) hin umfasst; und
zwei Filter (13), die innerhalb des Hohlraums (10) zwischen der Einlassöffnung (11) und der Auslassöffnung (8) angeordnet sind und den Hohlraum (10) in eine einzelne Auslasskammer, die stromabwärts der Filter (13) angeordnet ist und mit der Verbrennungswärmekraftmaschine (4) durch die Auslassöffnung (8) kommuniziert, und in zwei Einlasskammern unterteilen, die gegenüberliegenden bzw. entgegengesetzten Seiten der Auslasskammer zugewandt sind, stromaufwärts der jeweiligen Filter (13) angeordnet sind und mit der Außenseite durch die jeweiligen Einlassöffnungen (11) kommunizieren;
wobei die Filtervorrichtung (6) **dadurch gekennzeichnet ist, dass**:
jeder Filter (13) ein gekrümmtes und offenes Profil mit einer Konkavität aufweist, die zu der Auslassöffnung (8) hin ausgerichtet ist; und
die einzelne Auslasskammer die Form eines "Griechischen Theaters" aufweist, wobei sich in dem Bereich der "Bühne", die in der Mitte angeordnet ist, die Auslassöffnung (8) befindet, während in dem Bereich der "Tribünen" die zwei Filter (13) nebeneinander sind.

2. Filtervorrichtung (6) nach Anspruch 1, **dadurch gekennzeichnet, dass** jeder Filter (13) einen gekrümmten Verlauf aufweist, der so konfiguriert ist, dass im Mittel eine der Auslassöffnung (8) zugewandte innere Fläche bzw. Oberfläche des Filters (13) die Punkte aufweist, die auf einer Linie parallel zu einer Längsachse (21) der Auslassöffnung (8) liegen, die auf die innere Fläche projiziert wird, und die von der Längsachse (21) gleichweit entfernt sind.

3. Filtervorrichtung (6) nach Anspruch 1 oder 2, wobei jeder Filter (13) einen gekrümmten Verlauf auf einer zylindrischen Erzeugenden aufweist, die auf einer Längsachse (21) der Auslassöffnung (8) zentriert ist.

4. Filtervorrichtung (6) nach Anspruch 1, 2 oder 3 und umfassend einen Verriegelungskörper (16), der zwischen den beiden Filtern (13) angeordnet ist und die Funktion des lateralen Pressens der beiden Filter (13) erfüllt.

5. Filtervorrichtung (6) nach einem der Ansprüche 1 bis 4, wobei die einzelne Auslasskammer oben durch einen abnehmbaren Deckel (14) begrenzt ist.

6. Filtervorrichtung (6) nach Anspruch 5, wobei:
ein Verriegelungskörper (16) bereitgestellt ist, der zwischen den beiden Filtern (13) angeordnet ist und die Funktion des lateralen Pressens der beiden Filter (13) erfüllt;
der Verriegelungskörper (16) eine obere Wand (17) aufweist, die an einer inneren Fläche bzw. Oberfläche des Deckels (14) anliegt, so dass der Deckel (14) den Verriegelungskörper (16) zu einem Boden des Hohlraums (10) hin presst; und
der Verriegelungskörper (16) einen unteren Abschnitt (18) aufweist, der keilförmig ist und zwischen den beiden Filtern (13) angeordnet ist.

7. Filtervorrichtung (6) nach Anspruch 6, wobei der Verriegelungskörper (16) einen Zwischenabschnitt (19) aufweist, der die obere Wand (17) mit dem unteren Abschnitt (18) verbindet und so geformt ist, dass er die Luftströme von den Filtern (13) kommend zu der Auslassöffnung (8) hin führt.

8. Filtervorrichtung (6) nach Anspruch 5, 6 oder 7, wobei der Luftkasten (9) erhalten wird durch Verbinden einer unteren Schale, wo die Auslassöffnung (8) erhalten wird, und einer oberen Schale, wo die zwei Einlassöffnungen (11) sowie eine obere Öffnung erhalten werden, die der Auslassöffnung (8) gegenüberliegend bzw. entgegengesetzt ist und durch den Deckel (14) verschlossen ist.

9. Filtervorrichtung (6) nach einem der Ansprüche 5 bis 8, wobei der Deckel (14) auf der Innenseite mit einem schallabsorbierenden Material beschichtet ist.

10. Filtervorrichtung (6) nach einem der Ansprüche 1 bis 9, wobei:
jede Einlasskammer eine rohrförmige Form aufweist und sich zu der entsprechenden Einlassöffnung (11) hin erstreckt; und
die zwei Einlasskammern sich lateral von der Auslasskammer erstrecken und von gegenüberliegenden bzw. entgegengesetzten Enden der Auslasskammer beginnen.

11. Filtervorrichtung (6) nach einem der Ansprüche 1 bis 10, wobei der Hohlraum (10) zwei Sitze umfasst, die die Form der zwei Filter (13) negativ nachbilden und ausgelegt sind, die zwei Filter (13) aufzunehmen.

12. Filtervorrichtung (6) nach einem der Ansprüche 1 bis 11 und umfassend ein absorbierendes Element (20), das innerhalb des Hohlraums (10) angeordnet und ausgelegt ist, Schadstoffe zurückzuhalten.

13. Auto (1), umfassend:
ein Paar Vorderräder (2);
ein Paar Hinterräder (3);
einen Verbrennungsmotor bzw. eine Verbrennungswärmekraftmaschine (4), der bzw. die in einer zentralen Position angeordnet ist;
zwei Lufteinlässe (7), die auf zwei gegenüberliegenden bzw. entgegengesetzten Körper- bzw. Karosserieseiten erhalten sind;
eine Filtervorrichtung (6), die gemäß einem der Ansprüche 1 bis 12 realisiert ist; und
zwei Einlass- bzw. Ansaugkanäle (12), die jeweils einen Lufteinlass (7) mit einer entsprechenden Einlassöffnung (11) des Luftkastens (9) verbinden.

## Revendications

1. Dispositif de filtrage (6) pour l'air aspiré par un moteur thermique à combustion interne (4) d'une voiture (1) ; le dispositif de filtrage (6) comprend :
un caisson d'air (9) qui comprend, à l'intérieur, une unique cavité (10) présentant deux ouvertures d'entrée opposées (11) vers l'extérieur et une unique ouverture de sortie (8) vers le moteur thermique à combustion interne (4) ; et
deux filtres (13) qui sont disposés à l'intérieur de la cavité (10) entre l'ouverture d'entrée (11) et l'ouverture de sortie (8) et divisent la cavité (10) en une unique chambre de sortie, qui est disposée en aval des filtres (13) et communique avec le moteur thermique à combustion interne (4) à travers l'ouverture de sortie (8), et en deux chambres d'entrée, qui font face à des côtés opposés de la chambre de sortie, sont disposées en amont des filtres (13) respectifs et communiquent avec l'extérieur à travers les ouvertures d'entrée (11) respectives ;
le dispositif de filtrage (6) est **caractérisé en ce que** :
chaque filtre (13) a un profil courbe et ouvert présentant une concavité orientée vers l'ouverture de sortie (8) ; et
l'unique chambre de sortie a la forme d'un « théâtre grec », dans lequel dans la zone de la « scène », qui est disposée au centre, se trouve l'ouverture de sortie (8), alors que dans la zone des « gradins » se trouvent les deux filtres (13) l'un à côté de l'autre.

2. Dispositif de filtrage (6) selon la revendication 1, dans lequel chaque filtre (13) a un cheminement incurvé configuré de manière que, en moyenne, une surface intérieure du filtre (13) orientée vers l'ouverture de sortie (8) ait les points qui se situent sur une ligne parallèle à un axe longitudinal (21) de l'ouverture de sortie (8) projetée sur la surface intérieure et sont équidistants de l'axe longitudinal (21) .

3. Dispositif de filtrage (6) selon la revendication 1 ou 2, dans lequel chaque filtre (13) a un cheminement incurvé sur une génératrice cylindrique centrée sur un axe longitudinal (21) de l'ouverture de sortie (8).

4. Dispositif de filtrage (6) selon la revendication 1, 2 ou 3 et comprenant un corps de verrouillage (16) qui est interposé entre les deux filtres (13) et remplit la fonction de pression latérale sur les deux filtres (13).

5. Dispositif de filtrage (6) selon l'une des revendications 1 à 4, dans lequel l'unique chambre de sortie est délimitée, au sommet, par un couvercle amovible (14).

6. Dispositif de filtrage (6) selon la revendication 5, dans lequel :
un corps de verrouillage (16) est prévu, lequel est interposé entre les deux filtres (13) et remplit la fonction de pression latérale sur les deux filtres (13) ;
le corps de verrouillage (16) a une paroi supérieure (17) qui s'appuie contre une surface intérieure du couvercle (14) de manière que le couvercle (14) presse le corps de verrouillage (16) vers un fond de la cavité (10) ; et
le corps de verrouillage (16) a une partie inférieure (18) qui est cunéiforme et disposée entre les deux filtres (13) .

7. Dispositif de filtrage (6) selon la revendication 6, dans lequel le corps de verrouillage (16) a une partie intermédiaire (19) qui relie la paroi supérieure (17) à la partie inférieure (18) et est profilée de manière à guider les flux d'air provenant des filtres (13) vers l'ouverture de sortie (8).

8. Dispositif de filtrage (6) selon la revendication 5, 6 ou 7, dans lequel le caisson d'air (9) est obtenu en unissant une enveloppe inférieure, où l'ouverture de sortie (8) est réalisée, et une enveloppe supérieure, où les deux ouvertures d'entrée (11) sont réalisées ainsi qu'une ouverture supérieure qui fait face et est opposée à l'ouverture de sortie (8) et est fermée par le couvercle (14).

9. Dispositif de filtrage (6) selon l'une des revendications 5 à 8, dans lequel le couvercle (14) est revêtu, sur l'intérieur, d'un matériau d'absorption sonore.

10. Dispositif de filtrage (6) selon l'une des revendications 1 à 9, dans lequel :
chaque chambre d'entrée a une forme tubulaire et s'étend vers l'ouverture d'entrée (11) correspondante ; et
les deux chambres d'entrée s'étendent latéralement à partir de la chambre de sortie et en partant d'extrémités opposées de la chambre de sortie.

11. Dispositif de filtrage (6) selon l'une des revendications 1 à 10, dans lequel la cavité (10) comprend deux sièges qui reproduisent, en négatif, la forme des deux filtres (13) et sont conçus pour loger les deux filtres (13).

12. Dispositif de filtrage (6) selon l'une des revendications 1 à 11 et comprenant un élément absorbant (20) qui est disposé à l'intérieur de la cavité (10) et est conçu pour retenir des éléments polluants.

13. Voiture (1) comprenant :
une paire de roues avant (2) ;
une paire de roues arrière (3) ;
un moteur thermique à combustion interne (4) disposé dans une position centrale ;
deux prises d'air (7) réalisées sur deux flancs de carrosserie opposés ;
un dispositif de filtrage (6) réalisé conformément à une des revendications 1 à 12 ; et
deux conduits d'admission (12), chacun desquels relie une prise d'air (7) à une ouverture d'entrée (11) correspondante du caisson d'air (9).
